# EUROPEAN PATENT APPLICATION

(11) **EP 4 557 808 A1**
(43) Date of publication of application: **21.05.2025**
(21) Application number: 23838939.9
(22) Date of filing: 11.07.2023
(51) Int. Cl.: H04W 24/08

(54) **CELL MEASUREMENT METHOD AND APPARATUS, CELL CONFIGURATION METHOD AND APPARATUS, AND TERMINAL AND NETWORK-SIDE DEVICE**

(30) Priority: 15.07.2022 CN 202210837687
(71) Applicant: Vivo Mobile Communication Co., Ltd., Dongguan, Guangdong 523863 (CN)
(72) Inventor: HE, Ranran, Dongguan, Guangdong 523863 (CN); ZHANG, Yanxia, Dongguan, Guangdong 523863 (CN)
(74) Representative: Conti, Marco
(86) International application number: PCT/CN2023/106774
(87) International publication number: WO 2024/012448

(57) **Abstract**

This application discloses a cell measurement method and apparatus, a configuration method and apparatus, a terminal, and a network side device, belonging to the field of communication technologies. The cell measurement method in embodiments of this application includes: performing, by a terminal, neighboring cell measurement based on a first measurement criterion; and the first measurement criterion includes at least one of the following: a time-based (time-based) measurement criterion and a location-based (location-based) measurement criterion.

## Description

### CROSS-REFERENCE TO RELATED APPLICATIONS

This application claims priority to Chinese Patent Application No. 202210837687.9 filed in China on July 15, 2022, which is incorporated herein by reference in its entirety.

### TECHNICAL FIELD

This application belongs to the field of communication technologies, and specifically, to a cell measurement method and apparatus, a configuration method and apparatus, a terminal, and a network side device.

### BACKGROUND

In a non-terrestrial network (Non-Terrestrial Network, NTN), a terminal in an idle state or an inactive state needs to perform cell reselection before service link switch or feeder link switch occurs. To perform cell reselection, the network may provide a time point at which a serving cell stops providing service, so that terminals camping on the cell start neighboring cell measurement before the cell stops providing service. However, for a cell that moves over time (such as an earth-moving cell), a time point at which the feeder link switch occurs is the same for all terminals camping on the cell, but a time point at which the service link switch occurs may be different for terminals located at different locations in the cell, resulting in different time points at which the terminals at different locations in the cell need to start neighboring cell measurement. The network cannot provide a unified service stopping time point for all the terminals in the earth-moving cell. As a result, the terminals may not be able to start neighboring cell measurement at a proper time point. Therefore, how to optimize cell measurement is an urgent problem that needs to be resolved.

### SUMMARY

Embodiments of this application provide a cell measurement method and apparatus, a configuration method and apparatus, a terminal, and a network side device, to resolve a problem of how to optimize cell measurement.

According to a first aspect, a cell measurement method is provided, including:
performing, by a terminal, neighboring cell measurement based on a first measurement criterion, where
the first measurement criterion includes at least one of the following: a time-based (time-based) measurement criterion and a location-based (location-based) measurement criterion.

According to a second aspect, a configuration method is provided, including:
sending, by a network side device, first related information of a time-based measurement criterion and/or second related information of a location-based measurement criterion to a terminal.

According to a third aspect, a cell measurement apparatus is provided, applied to a terminal, and the apparatus including:
an execution module, configured to perform neighboring cell measurement based on a first measurement criterion, where
the first measurement criterion includes at least one of the following: a time-based (time-based) measurement criterion and a location-based (location-based) measurement criterion.

According to a fourth aspect, a configuration apparatus is provided, applied to a network side device, and the apparatus including:
a sending module, configured to send first related information of a time-based measurement criterion and/or second related information of a location-based measurement criterion to a terminal.

According to a fifth aspect, a terminal is provided, where the terminal includes a processor and a memory, the memory stores a program or instructions executable on the processor, and the program or the instructions, when executed by the processor, implement the steps of the method according to the first aspect.

According to a sixth aspect, a terminal is provided, including a processor and a communication interface, where the processor is configured to perform neighboring cell measurement based on a first measurement criterion; and the first measurement criterion includes at least one of the following: a time-based (time-based) measurement criterion and a location-based (location-based) measurement criterion.

According to a seventh aspect, a network side device is provided. The network side device includes a processor and a memory, the memory stores a program or instructions executable on the processor, and the program or the instructions, when executed by the processor, implement the steps of the method according to the second aspect.

According to an eighth aspect, a network side device is provided, including a processor and a communication interface, where the communication interface is configured to send first related information of a time-based measurement criterion and/or second related information of a location-based measurement criterion to a terminal.

According to a ninth aspect, a communication system is provided, including a terminal and a network side device, where the terminal may be configured to perform the steps of the cell measurement method according to the first aspect, and the network side device may be configured to perform the steps of the configuration method according to the second aspect.

According to a tenth aspect, a readable storage medium is provided. The readable storage medium stores a program or instructions, where the program or the instructions, when executed by a processor, implement the steps of the method according to the first aspect, or implement the steps of the method according to the second aspect.

According to an eleventh aspect, a chip is provided. The chip includes a processor and a communication interface, where the communication interface is coupled to the processor, and the processor is configured to run a program or instructions, to implement the steps of the method according to the first aspect, or implement the steps of the method according to the second aspect.

According to a twelfth aspect, a computer program/program product is provided, being stored in a storage medium, where the computer program/program product, when executed by at least one processor, implements the steps of the method according to the first aspect, or implements the steps of the method according to the second aspect.

In the embodiments of this application, the terminal may perform neighboring cell measurement based on the time-based measurement criterion and/or the location-based measurement criterion, so that the terminal can start neighboring cell measurement at a proper time point through an optimized cell reselection measurement criterion, thereby ensuring mobility of a terminal in an idle/inactive state.

### BRIEF DESCRIPTION OF THE DRAWINGS

FIG. 1 is a block diagram of a wireless communication system to which an embodiment of this application is applicable;
FIG. 2 is a flowchart of a cell measurement method according to an embodiment of this application;
FIG. 3 is a schematic diagram of a coverage area change according to an embodiment of this application;
FIG. 4 is a schematic diagram of cell movement according to an embodiment of this application;
FIG. 5 is a flowchart of a configuration method according to an embodiment of this application;
FIG. 6 is a schematic diagram of a structure of a cell measurement apparatus according to an embodiment of this application;
FIG. 7 is a schematic diagram of a structure of a configuration apparatus according to an embodiment of this application;
FIG. 8 is a schematic diagram of a structure of a communication device according to an embodiment of this application;
FIG. 9 is a schematic diagram of a structure of a terminal according to an embodiment of this application; and
FIG. 10 is a schematic diagram of a structure of a network side device according to an embodiment of this application.

### DETAILED DESCRIPTION

The technical solutions in embodiments of this application are clearly described below with reference to the accompanying drawings in embodiments of this application. Apparently, the described embodiments are merely some rather than all of embodiments of this application. All other embodiments obtained by a person of ordinary skill in the art based on embodiments of this application shall fall within the protection scope of this application.

The specification and claims of this application, and terms "first" and "second" are used to distinguish similar objects, but are unnecessarily used to describe a specific sequence or order. It may be understood that the terms used in such a way is interchangeable in proper circumstances, so that embodiments of this application can be implemented in other sequences than the sequence illustrated or described herein. In addition, objects distinguished by "first" and "second" are usually of a type, and the number of objects is not limited. For example, a first object may be one or more than one. In addition, in the specification and claims, "and/or" means at least one of the connected objects, and the character "/" generally is used to indicate an "or" relation between associated objects.

It should be noted that, the technology described in embodiments of this application is not limited to a long term evolution (Long Term Evolution, LTE)/LTE evolution (LTE-Advanced, LTE-A) system, but may further be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access, (Orthogonal Frequency Division Multiple Access, OFDMA), single-carrier frequency-division multiple access (Single-carrier Frequency-Division Multiple Access, SC-FDMA), and other systems. The terms "system" and "network" in embodiments of this application are often used interchangeably, and the described technologies may be used both for the systems and radio technologies mentioned above and may also be used for other systems and radio technologies. The following descriptions describe a new radio (New Radio, NR) system for the objective of being used as an example, and NR terms are used in most of the descriptions below. However, these technologies may also be applied to applications other than NR system applications, such as a 6th generation (6th Generation, 6G) communication system.

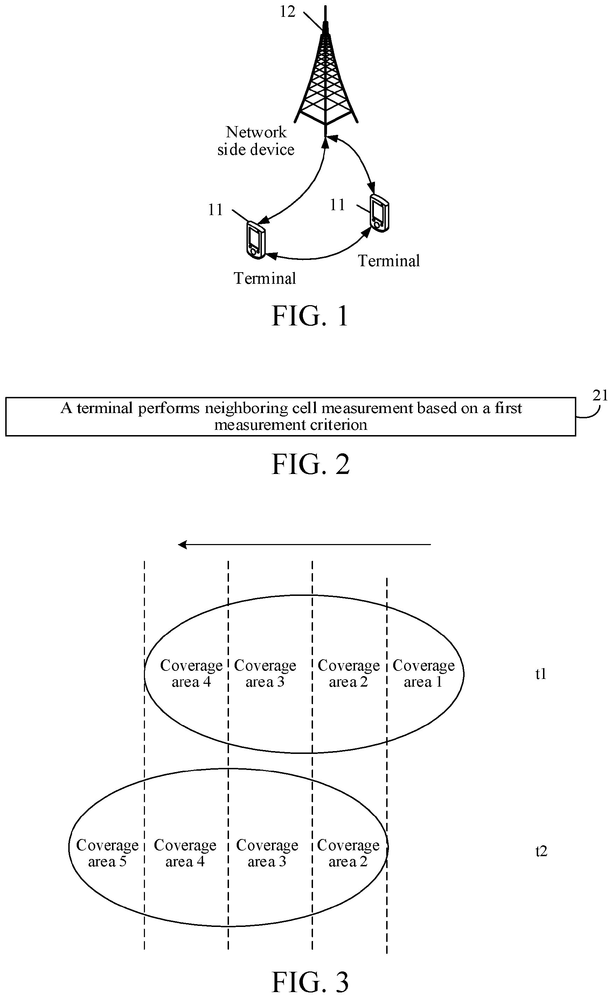

FIG. 1 is a block diagram of a wireless communication system to which an embodiment of this application is applicable. The wireless communication system includes a terminal 11 and a network side device 12. The terminal 11 may be a terminal side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device with a wireless communication function, such as a refrigerator, a television, a washing machine, or a piece of furniture), a game console, a personal computer (personal computer, PC), a cash machine, or a self-service machine. The wearable device includes: a smart watch, a smart bracelet, smart headphones, smart glasses, smart jewelry (a smart bracelet, a smart bracelet, a smart ring, a smart necklace, a smart anklet, a smart anklet, and the like), a smart wristband, smart clothing, and the like. It should be noted that in embodiments of this application, a specific type of the terminal 11 is not limited. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service S, ESS), a home NodeB, a home evolved NodeB, a transmission reception point (Transmission Reception Point, TRP), or some other proper terms in the field. Provided that the same technical effect is achieved, the base station is not limited to a specific technology vocabulary. It should be noted that, in the embodiments of this application, only a base station in the NR system is used as an example for description, but a specific type of the base station is not limited.

For the ease of understanding the embodiments of this application, the following contents are first described.

A non-terrestrial network (Non-Terrestrial Network, NTN) refers to a network or a network segment on which transmission is performed by using a satellite, an unmanned aircraft system (Unmanned Aircraft System, UAS) platform, a high-altitude platform system (High-Altitude Platform System, HAPS), or the like. Compared with a terrestrial communication system, the satellite-based non-terrestrial communication system has a wider coverage range. Typical applicable scenarios include cases in which a ground base station cannot be built and/or a ground base station is damaged, such as continuous coverage in a remote mountainous area, a desert, an ocean, and a forest, or emergency communication when a natural disaster occurs or the ground base station is damaged.

Optionally, the satellite may include but is not limited to a low earth orbiting (Low Earth Orbiting, LEO) satellite, a medium earth orbiting (Medium Earth Orbiting, MEO) satellite, a geostationary earth orbiting (Geostationary Earth Orbiting, GEO) satellite, a highly elliptical orbiting (Highly Elliptical Orbiting, HEO) satellite, and the like.

Typical scenarios of the non-terrestrial network include a transparent forwarding scenario and a signal regeneration scenario. For the signal regeneration scenario, the satellite directly serves as a base station. For the transparent forwarding scenario, the satellite serves as a forwarding relay, a link between the satellite and a terminal is a service link (service link), and a link between the satellite and the ground base station is a feeder link (feeder link). Mobility during service link (service link switch) switch and feeder link (feeder link switch) switch is level 3 (Level 3, L3) mobility has occurred. In this case, a physical cell identifier (Physical Cell Identifier, PCI) of a cell changes, and terminals in an idle state or an inactive state need to perform cell reselection.

For the low earth orbiting satellite moving in the sky over time, there are two types of cell deployment:
(1) earth-moving cell: A cell (ground coverage area) moves over time, that is, a cell deployed on the ground moves with movement of a satellite; and
(2) quasi-earth-fixed cell: A cell covers one geographic area in a period of time and covers a different geographic area in another period of time; and for example, the satellite may implement this scenario by generating a steerable beam.

The cell measurement method and apparatus, the configuration method and apparatus, the terminal, and the network side device provided in the embodiments of this application are described in detail below by using some embodiments and application scenarios thereof with reference to the accompanying drawings.

FIG. 2 is a flowchart of a cell measurement method according to an embodiment of this application. The method is applied to a terminal. As shown in FIG. 2, the method includes the following steps.

Step 21: A terminal performs neighboring cell measurement based on a first measurement criterion.

In this embodiment, the first measurement criterion may include at least one of the following: a time-based (time-based) measurement criterion and a location-based (location-based) measurement criterion.

In some embodiments, for the time-based measurement criterion, if a network provides a time point at which a serving cell stops providing service, the terminal needs to start neighboring cell measurement before the serving cell stops providing service.

In some embodiments, for the location-based measurement criterion, if a distance between the terminal and a reference location of the serving cell is greater than or equal to a preset threshold, the terminal needs to start neighboring cell measurement.

Optionally, scenarios to which the embodiments of this application are applicable include but are not limited to an earth-moving cell scenario and the like. For example, the foregoing terminal is a terminal camping on the earth-moving cell.

In cell measurement method provided in the embodiments of this application, the terminal may perform neighboring cell measurement based on the time-based measurement criterion and/or the location-based measurement criterion, so that the terminal can start neighboring cell measurement at a proper time point through an optimized cell reselection measurement criterion, thereby ensuring mobility of a terminal in an idle/inactive state.

In the embodiments of this application, a network may not support configuration of both the time-based measurement criterion and the location-based measurement criterion, or may support configuration of both the time-based measurement criterion and the location-based measurement criterion. Detailed descriptions are provided below by using different cases.

Case 1: The network does not support configuration of both the time-based measurement criterion and the location-based measurement criterion

In this case 1, the time-based measurement criterion may be optimized for the earth-moving cell scenario. A process of performing neighboring cell measurement based on the time-based measurement criterion may include:
obtaining, by the terminal, a first time point and/or a second time point, where the first time point is used to indicate a time point at which a serving cell stops serving a first coverage area; the second time point is used to indicate a time point at which the serving cell stops serving a second coverage area; the first coverage area is an entire area covered by the serving cell; and the second coverage area is a partial area covered by the serving cell, and the terminal is located in the second coverage area, that is, the terminal is in the second coverage area; and
performing, by the terminal, neighboring cell measurement according to the first time point and/or the second time point.

In this way, through the obtained first time point and/or second time point, the terminal can start neighboring cell measurement at a proper time point.

Optionally, the first time point is a time point for feeder link switch, such as a time point for link switch between a satellite and a ground base station. The second time point is a time point for service link switch, such as a time point for link switch between a satellite and a terminal.

Optionally, the performing neighboring cell measurement according to the first time point and/or the second time point may include any one of the following:
performing, by the terminal, neighboring cell measurement before the first time point;
performing, by the terminal, neighboring cell measurement before the second time point; and
performing, by the terminal, neighboring cell measurement before the first time point and the second time point. That is, the terminal performs neighboring cell measurement before a previous time point between the first time point and the second time point.

In some embodiments, if the terminal obtains only the first time point, the terminal performs neighboring cell measurement before the first time point.

In some other embodiments, if the terminal obtains only the second time point, the terminal performs neighboring cell measurement before the second time point.

In some other embodiments, if the terminal obtains the first time point and the second time point, the terminal performs neighboring cell measurement before a previous time point between the first time point and the second time point.

Optionally, a time point for performing neighboring cell measurement may depend on terminal implementation, that is, a specific time point for performing neighboring cell measurement is determined by the terminal.

Optionally, the time point for performing neighboring cell measurement may be equal to the first time point minus a time point indicated by a first offset. Alternatively, the time point for performing neighboring cell measurement may be equal to the second time point minus a time point indicated by a first offset. The first offset may be specified in a protocol, configured by a network, or the like. This is not limited thereto.

It should be noted that, a behavior of performing neighboring cell measurement before the first time point or the second time point may be specified in a protocol or configured by a network side. If the behavior is specified in a protocol, the behavior is always performed by the terminal, that is, if the first time point and/or the second time point are/is configured by the network side, the terminal performs neighboring cell measurement before the first time point and/or the second time point. If the behavior is configured by a network side, the terminal performs the behavior only when the network side configures the terminal to perform the behavior. For example, the network side device may indicate, by using 1 bit, a domain configuration terminal to perform the foregoing behavior or not to perform the foregoing behavior. For example, when the indication field exists and a value of the indication field is true, the terminal performs the foregoing behavior; and when the indication field does not exist, the terminal does not perform the foregoing behavior. For another example, when the indication field is 1/true, the terminal performs the foregoing behavior; and when the indication field is 0/false, the terminal does not perform the foregoing behavior, and vice versa. The foregoing terminal is a terminal with a related capability, and the related capability is, for example, supporting the time-based measurement criterion, or supporting obtaining of the first time point and/or the second time point.

Optionally, when neighboring cell measurement is performed, a frequency of a neighboring cell may satisfy at least one of the following:
being the same as a frequency of the serving cell, that is, an intra-frequency of the serving cell;
an inter-frequency (inter-frequency) or an inter-RAT frequency (inter-RAT frequency) having a higher reselection priority than the frequency of the serving cell, for example, the terminal performs inter-frequency or inter-RAT frequency measurement having a higher reselection priority than the reselection priority of the current frequency, where the current frequency is the frequency of the serving cell in which the terminal camps;
an inter-frequency or an inter-RAT frequency having a same reselection priority as the frequency of the serving cell, for example, the terminal performs inter-frequency or inter-RAT frequency measurement having a same reselection priority as the reselection priority of the current frequency, where the current frequency is the frequency of the serving cell in which the terminal camps; and
an inter-frequency or an inter-RAT frequency having a lower reselection priority than the frequency of the serving cell, for example, the terminal performs inter-frequency or inter-RAT frequency measurement having a lower reselection priority than the reselection priority of the current frequency, where the current frequency is the frequency of the serving cell in which the terminal camps.

Optionally, when obtaining the first time point, the terminal may obtain the first time point through first system information and/or first dedicated signaling received from a network side device. For example, the first time point may be directly carried by the first system information and/or the first dedicated signaling. The first system information is, for example, a system information block (System Information Block, SIB), such as a SIB 19. The first dedicated signaling is, for example, a radio resource control (Radio Resource Control, RRC) release message.

In this embodiment, the terminal may obtain the second time point in different manners. Descriptions are provided below.

### Manner 1

In this manner, the terminal may determine the second time point according to a first association relationship and a location of the terminal. The first association relationship is used to indicate an association relationship between at least one third coverage area and at least one third time point, the third coverage area is a partial area covered by the serving cell, the third time point is used to indicate a time point at which the serving cell stops serving a first area, and the first area is the third coverage area associated with the third time point. In this way, the second time point may be determined through the first association relationship.

Optionally, the first association relationship may be represented by a first list and a second list, the first list includes at least one coverage area identifier, the at least one coverage area identifier respectively indicates the at least one third coverage area, the second list includes the at least one third time point, the at least one coverage area identifier in the first list is in a one-to-one correspondence with the at least one third time point in the second list, an n^{th} third time point in the second list is used to indicate a time point at which the serving cell stops serving a second area, the second area is an n^{th} third coverage area in the first list, and n is an integer greater than or equal to 1.

For example, the first list is a coverage area list 1, such as {a coverage area 1, a coverage area 2, ..., and a coverage area e}, and the second list is a time information list 2, such as {a time point 1, a time point 2, ..., and a time point e}, where e represents a quantity of coverage areas in the list 1, and the elements in the coverage area list 1 are in a one-to-one correspondence with the elements in the time list 2. An n^{th} element in the time information list 2 represents that a time point at which the serving cell stops serving a coverage area n is a time point n.

Optionally, the first association relationship may be represented by a third list, the third list includes at least one first element, and each first element is used to indicate an association relationship between one third coverage area and one third time point.

For example, the third list is a list provided by the network in which coverage areas are associated with time information, for example, {an element 1, ..., and an element f}, an element 1={a coverage area 1, a time point 1}, ..., and an element f={a coverage area f, a time point f}, where f represents a quantity of coverage areas in the corresponding list.

Optionally, before determining the second time point, the terminal may obtain the first association relationship through second system information and/or second dedicated signaling received from a network side device. For example, the first association relationship may be provided by carrying the first list and the second list, or carrying the third list through the second system information and/or the second dedicated signaling. The second system information is, for example, a SIB, such as a SIB 19. The second dedicated signaling is, for example, an RRC release message.

In some embodiments, when the network side provides the first association relationship through a system message, the first association relationship may be excluded when determining a change of system information, that is, a change of a corresponding domain (corresponding to the first association relationship) neither causes a change notification of the system information nor affects a modification of a value tag (value Tag) in a SIB 1.

Optionally, after obtaining the first association relationship, the terminal may determine that the serving cell is an earth-moving cell. In other words, if the network provides the first association relationship, it represents that the network implicitly is used to indicate that the serving cell is the earth-moving cell, and the terminal may determine that the serving cell is the earth-moving cell.

Optionally, a process of determining the second time point based on the first association relationship and a location of the terminal may include: First, the terminal determines the second coverage area based on the location of the terminal (such as a current location of the terminal), that is, determines a coverage area in which the terminal is located; and then determines, according to the first association relationship, that a third time point associated with the second coverage area is the second time point.

For example, the coverage area may be represented by one reference location and one distance threshold. If the terminal determines that a distance between the terminal and the reference location is less than or equal to the distance threshold, it represents that the terminal is in the coverage area, and the terminal determines that a time point associated with the coverage area is the second time point.

For another example, referring to FIG. 3, a coverage area of a cell may change over time. For example, at t1, the coverage area includes a coverage area 1, a coverage area 2, a coverage area 3, and a coverage area 4, and a corresponding first association relationship is related to the coverage area 1, the coverage area 2, the coverage area 3, and the coverage area 4; and at t2, the coverage area includes the coverage area 2, the coverage area 3, the coverage area 4, and a coverage area 5, and a corresponding first association relationship is related to the coverage area 2, the coverage area 3, the coverage area 4, and the coverage area 5.

### Manner 2

In this manner, the terminal may determine the second time point according to the second association relationship and a first beam on which the terminal is located. The second association relationship is used to indicate an association relationship between at least one second beam and at least one fourth time point, an area covered by the second beam is a partial area covered by the serving cell, the fourth time point is used to indicate a time point at which the serving cell stops serving a third area, and the third area is the area covered by the second beam associated with the fourth time point. In this way, the second time point may be determined through the second association relationship.

Optionally, the second association relationship may be represented by a fourth list and a fifth list, the fourth list includes at least one beam identifier, the at least one beam identifier respectively indicates the at least one second beam, the fifth list includes the at least one fourth time point, the the at least one beam identifier in the fourth list is in a one-to-one correspondence with the at least one fourth time point in the fifth list, an m^{th} fourth time point in the fifth list is used to indicate a time point at which the serving cell stops serving a fourth area, the fourth area is an area covered by an m^{th} beam in the fourth list, and m is an integer greater than or equal to 1. The beam identifier may be a beam number, a beam index, or the like.

For example, the fourth list is a beam number/index list 1, such as {a beam 1, a beam 2, ..., and a beam e}, and the fifth list is a time information list 2, such as {a time point 1, a time point 2, ..., and a time point e}. The elements of the list 1 are in a one-to-one correspondence with the elements of the list 2. An m^{th} element in the time information list 2 represents that a time point at which the serving cell stops serving an area covered by a beam m is a time point m. If a beam on which the terminal is currently located is the beam m, it is determined that the second time point is the time point m.

Optionally, the second association relationship may be represented by a sixth list, the sixth list includes at least one second element, and each second element is used to indicate an association relationship between one second beam and one fourth time point.

For example, the sixth list provides a list indicating that a beam number/index is associated with time information for the network, such as {an element 1, ..., and an element f}, an element 1={a beam 1, a time point 1}, ..., and an element f={a beam f, a time point f}, where f represents a quantity of beams in the corresponding list. If a beam on which the terminal is currently located is the beam m, it is determined that the second time point is the time point m.

Optionally, before determining the second time point, the terminal may obtain the second association relationship through third system information and/or third dedicated signaling received from a network side device. For example, the second association relationship may be provided by carrying the fourth list and the fifth list, or carrying the sixth list, through the third system information and/or the third dedicated signaling. The third system information is, for example, a SIB, such as a SIB 19. The third dedicated signaling is, for example, an RRC release message.

It should be noted that, the first system information, the second system information, and the third system information may be the same or different. The first dedicated signaling, the second dedicated signaling, and the third dedicated signaling may be the same or different.

In some embodiments, when the network side provides the second association relationship through a system message, the second association relationship may be excluded when determining a change of system information, that is, a change of a corresponding domain (corresponding to the second association relationship) neither causes a change notification of the system information nor affects a modification of a value tag (value Tag) in a SIB 1.

Optionally, after obtaining the second association relationship, the terminal may determine that the serving cell is an earth-moving cell. In other words, if the network provides the second association relationship, it represents that the network implicitly is used to indicate that the serving cell is the earth-moving cell, and the terminal may determine that the serving cell is the earth-moving cell.

Optionally, a process of determining the second time point according to the second association relationship and the first beam on which the terminal is located may include: determining, by the terminal according to the second association relationship, the fourth time point associated with the first beam as the second time point.

### Manner 3

In this manner, the network provides a beam-specific (for example, beam-specific) fifth time point, and the terminal determines that the received fifth time point is the second time point. The obtaining the second time point may include: obtaining, by the terminal, a fifth time point corresponding to a third beam, where the third beam is a beam on which the terminal is located; and then determining the fifth time point as the second time point.

### Manner 4

In this manner, the terminal may obtain first information, where the first information is used to indicate coverage information of the serving cell; and then determine a second time point based on the first information and a location of the terminal. For example, the first information may be provided by a network side device, and the terminal may receive first information from the network side device.

Optionally, the first information may include but is not limited to at least one of the following:
a reference location, for example, the reference location is a center of the serving cell;
a first distance threshold;
a moving direction of the reference location;
a moving speed of the reference location;
a coverage area of the serving cell;
a moving direction of the serving cell;
a moving speed of the serving cell; and
a rule for how the reference location changes over time.

It should be noted that, the first distance threshold is mainly used to be compared with a distance from the terminal to the reference location, to determine the second time point. The moving direction of the reference location, the moving speed of the reference location, the moving direction of the serving cell, the moving speed of the serving cell, and/or the rule for how the reference location changes over time may be used to determine a boundary of the serving cell, to determine the second time point.

In some embodiments, the terminal may determine that a time point at which the distance from the terminal to the reference location is greater than or equal to the first distance threshold is the second time point.

In some other embodiments, the terminal may determine that a time point at which the terminal is not within the coverage area of the serving cell is the second time point.

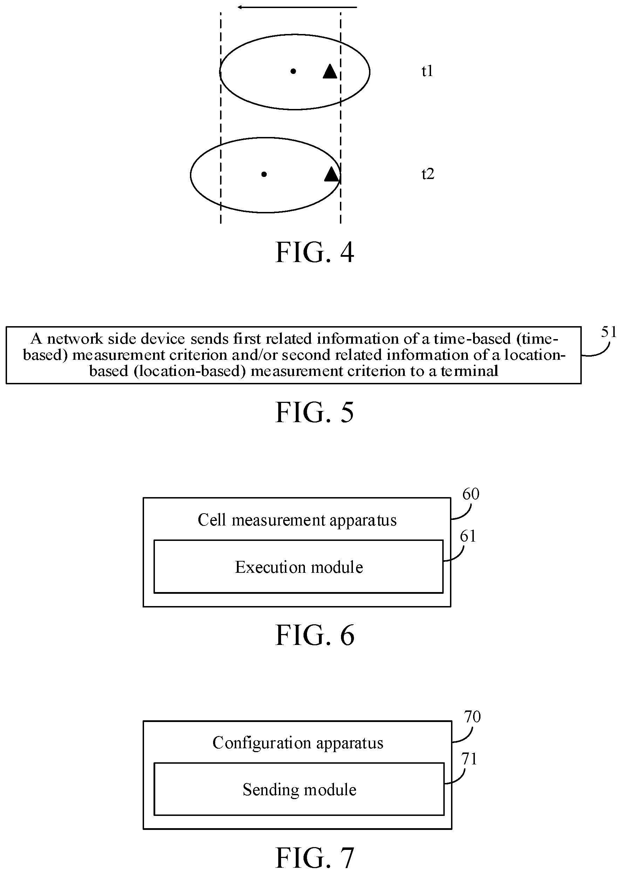

For example, as shown in FIG. 4, the coverage area of the cell may change over time. If a terminal 1 (for example, a triangular block shown in FIG. 4) receives the first information at t1, such as including the reference location and the first distance threshold, and estimates that a distance from the terminal 1 to the reference location at t2 is greater than or equal to the first distance threshold, it may be determined that the second time point is t2.

The terminal may obtain the first information through system information and/or dedicated signaling received from the network side device. The system information is, for example, a SIB, such as a SIB 19. The dedicated signaling is, for example, an RRC release message.

In some embodiments, when the network side provides the first information through a system message, the first information may be excluded when determining a change of the system information, that is, a change of a corresponding domain (corresponding to the first information) neither causes a change notification of the system information nor affects a modification of a value tag (value Tag) in a SIB 1.

Optionally, after obtaining the first information, the terminal may determine that the serving cell is an earth-moving cell. In other words, if the network provides the first information, it represents that the network implicitly is used to indicate that the serving cell is the earth-moving cell, and the terminal may determine that the serving cell is the earth-moving cell.

Optionally, when obtaining the first time point, the terminal may determine, according to a specification in a protocol, that the first information is only used by the terminal to determine the second time point, that is, determine that the first information is used only for a time-based measurement criterion. In other words, it may be specified in a protocol that when the first time point exists, the first information is only used by the terminal to determine the second time point, that is, used only for the time-based measurement criterion; and when the first time point does not exist, the first information is used for a location-based measurement criterion.

Optionally, the network may indicate that the first information is only used by the terminal to determine the second time point. The terminal may receive first indication information, and determine, based on the first indication information, that the first information is only used by the terminal to determine the second time point, that is, determine that the first information is used only for the time-based measurement criterion. The first indication information is used to indicate that the first information is only used by the terminal to determine the second time point. For example, the terminal may receive the first indication information from the network side device.

In some embodiments, the network may indicate through a 1-bit indication field that the first information is only used by the terminal to determine the second time point. For example, when the indication field exists and a value of the indication field is true (true), it represents that the first information is only used by the terminal to determine the second time point, that is, the first information is used only for the time-based measurement criterion; and when the indication field does not exist, it represents that the first information is used only for the location-based measurement criterion, and vice versa. Alternatively, when a value of the indication domain is 1/true, it represents that the first information is only used by the terminal to determine the second time point, that is, the first information is used only for the time-based measurement criterion; and when a value of the indication domain is 0/false (false), it represents that the first information is used only for the location-based measurement criterion, and vice versa.

Optionally, the network may indicate that the serving cell in which the terminal camps is an earth-moving cell. The terminal may receive the second indication information, and determine that the serving cell is the earth-moving cell according to the second indication information. For example, the terminal may receive the second indication information from the network side device.

In some embodiments, the second indication information is used to indicate whether the serving cell is the earth-moving cell or is not the earth-moving cell. Alternatively, the second indication information is used to indicate that the serving cell is the earth-moving cell, a quasi earth-fixed cell, or a fixed cell.

For example, the network may indicate a cell type of the serving cell through the 1-bit indication field. For example, when the indication field exists and a value of the indication field is true, it represents that the serving cell is the earth-moving cell; and when the indication field does not exist, it represents that the serving cell is not the earth-moving cell. Alternatively, when a value of the indication field is 1, it represents that the serving cell is the earth-moving cell; and when a value of the indication field is 0, it represents that the serving cell is not the earth-moving cell. Alternatively, when a value of the indication field is true, it represents that the serving cell is the earth-moving cell; and when a value of the indication field is false, it represents that the serving cell is not the earth-moving cell.

For another example, the network may indicate a cell type of the serving cell through the 1-bit indication field. For example, when the indication field exists and a value of the indication field is 1, it represents that the serving cell is the earth-moving cell; when the indication field exists and a value of the indication field is 0, it represents that the serving cell is a quasi-fixed cell; and when the indication field does not exist, it represents that the serving cell is a fixed cell.

For another example, the network may indicate a cell type of the serving cell through a 2-bit indication field. For example, when the indication field exists and a value of the indication field is 01, it represents that the serving cell is the earth-moving cell; when the indication field exists and a value of the indication field is 10, it represents that the serving cell is a quasi-fixed cell; and when the indication field exists and a value of the indication field is 11, it represents that the serving cell is a fixed cell.

Case 2: Support the network in configuring both a time-based measurement criterion and a location-based measurement criterion

In this case 2, the network side device provides both first related information of the time-based measurement criterion and second related information of the location-based measurement criterion. Correspondingly, the terminal receives the first related information of the time-based measurement criterion and the second related information of the location-based measurement criterion.

Optionally, the first related information includes a first time point and/or a second time point, the first time point is used to indicate a time point at which the serving cell stops serving a first coverage area, and the first coverage area is an entire area covered by the serving cell; the second time point is used to indicate a time point at which the serving cell stops serving a second coverage area; and the second coverage area is a partial area covered by the serving cell.

Optionally, the second related information may include but is not limited to any one of the following:
a reference location, for example, the reference location is a center of the serving cell;
a first distance threshold, for example, the first distance threshold is mainly used to be compared with a distance from the terminal to the reference location, to determine whether to perform neighboring cell measurement;
a rule for how the reference location changes over time;
a variability of the reference location, where reference locations corresponding to different time points may be determined by the variability of the reference location;
a first reference location;
an eighth time point, where the eighth time point is used to indicate that a reference location of the serving cell at the eighth time point is the first reference location;
a validity time period, where the validity time period is used to indicate a longest time period in which the terminal applies the obtained reference location when a new reference location is not obtained;
a cycle of obtaining the reference location;
a trigger event of obtaining the reference location;
a moving speed of the reference location;
a moving direction of the reference location.

In this case 2, the time-based measurement criterion and/or the location-based measurement criterion may be applied in a plurality of manners. Descriptions are provided below.

Manner 1: The terminal always applies the time-based measurement criterion and the location-based measurement criterion.

In this manner, before the performing neighboring cell measurement based on a first measurement criterion, the terminal applies the time-based measurement criterion and the location-based measurement criterion.

Optionally, this manner may be specified in a protocol. That is, it is specified in a protocol that if related information of the time-based measurement criterion and the location-based measurement criterion is configured by a network side, once the terminal receives the related information, the terminal should apply a corresponding measurement criterion.

Manner 2: The terminal always applies a second measurement criterion and applies or cancels application of a third measurement criterion; the second measurement criterion is the location-based measurement criterion, and the third measurement criterion is the time-based measurement criterion; or the second measurement criterion is the time-based measurement criterion, and the third measurement criterion is the location-based measurement criterion.

Optionally, the manner 2 may include one of the following:
(1) The terminal always applies the location-based measurement criterion, and applies or cancels application of the time-based measurement criterion according to an indication or a predefined/preconfigured/configured rule, for example, the terminal always applies the location-based measurement criterion based on a specification in a protocol, that is, it is specified in a protocol that once the terminal receives the related information of the location-based measurement criterion, the terminal should apply the location-based measurement criterion; and
(2) the terminal always applies the time-based measurement criterion, and applies or cancels application of the location-based measurement criterion according to an indication or a predefined/configured rule, for example, the terminal always applies the time-based measurement criterion based on a specification in a protocol, that is, it is specified in a protocol that once the terminal receives the related information of the time-based measurement criterion, the terminal should apply the time-based measurement criterion.

Optionally, before the performing neighboring cell measurement based on a first measurement criterion, the terminal may apply a second measurement criterion; and apply or cancel application of a third measurement criterion according to first downlink information, or apply or cancel application of a third measurement criterion according to fourth system information.

Optionally, the applying or canceling application of a third measurement criterion according to first downlink information may include but not limited to at least one of the following.
(1) The terminal applies or cancels application of the third measurement criterion according to a first bit in a short message indication field (such as Short Message indicator). The first bit is used to indicate the terminal to apply or cancel application of the third measurement criterion. The third measurement criterion is, for example, a time-based measurement criterion or a location-based measurement criterion.

For example, if the terminal detects a physical downlink control channel (Physical downlink control channel, PDCCH) scrambled by a paging radio network temporary identifier (Paging Radio Network Temporary Identifier, P-RNTI) at a paging occasion (Paging Occasion, PO), and detects that a bit field (bit field, namely, the first bit) of the short message indicator is "00", the terminal applies the third measurement criterion (such as the time-based measurement criterion or the location-based measurement criterion).

(2) The terminal applies or cancels application of the third measurement criterion according to a second bit in a first short message (such as Short Message). The second bit is used to indicate the terminal to apply or cancel application of the third measurement criterion. The third measurement criterion is, for example, the time-based measurement criterion or the location-based measurement criterion. For example, when a value of the second bit is 1, it is used to indicate that the terminal applies the third measurement criterion; and when a value of the second bit is 0, it is used to indicate that the terminal cancels application of the third measurement criterion. Alternatively, when a value of the second bit is 0, it is used to indicate that the terminal applies the third measurement criterion; and when a value of the second bit is 1, it is used to indicate that the terminal cancels application of the third measurement criterion.

For example, if the terminal detects the PDCCH scrambled by the P-RNTI at the PO, and detects that a bit field of the short message indicator is "10" or "11 " (which represents that the short message exists), and detects that a 5th bit is set in the short message, and the bit is set to 1, the terminal applies the third measurement criterion (such as the time-based measurement criterion or the location-based measurement criterion); or if the terminal detects the PDCCH scrambled by the P-RNTI at the PO, and detects that a bit field of the short message indicator is "10" or "11" (which represents that the short message exists), and detects that a 5th bit is set in the short message, and the bit is set to 0, the terminal cancels application of the third measurement criterion (such as the time-based measurement criterion or the location-based measurement criterion).

(3) The terminal applies or cancels application of the third measurement criterion according to a third bit in the second short message (such as Short Message). The third bit includes a fourth bit and a fifth bit, the fourth bit is used to indicate the terminal to apply the third measurement criterion, and the fifth bit is used to indicate the terminal to cancel application of the third measurement criterion. The third measurement criterion is, for example, the time-based measurement criterion or the location-based measurement criterion. For example, when a value of the fourth bit is 1, it is used to indicate that the terminal applies the third measurement criterion; and when a value of the fifth bit is 1, it is used to indicate that the terminal cancels application of the third measurement criterion.

For example, if the terminal detects the PDCCH scrambled by the P-RNTI at the PO, and detects that a bit field of the short Message indicator is "10" or "1 1" (which represents that the short message exists), and detects that a 5th bit is set in the short message, and the bit is set to 1, the terminal applies the third measurement criterion (such as the time-based measurement criterion or the location-based measurement criterion); and if the terminal detects the PDCCH scrambled by the P-RNTI at the PO, and detects that a bit field of the short message indicator is "10" or "11" (which represents that the short message exists), and detects that a 6th bit is set in the short message, and the bit is set to 1, the terminal cancels application of the third measurement criterion (such as the time-based measurement criterion or the location-based measurement criterion).

It should be noted that, in (1) to (3), if application of the third measurement criterion is not canceled based on the downlink information sent by the network side, after cell reselection occurs, the terminal cancels application of the third measurement criterion, such as the time-based measurement criterion or the location-based measurement criterion.

Optionally, the applying or canceling application of third measurement criterion according to fourth system information may include:
obtaining, by the terminal, a sixth time point and/or a seventh time point according to the fourth system information, where the sixth time point is used to indicate a time point for applying the third measurement criterion, and the seventh time point is used to indicate a time point for canceling application of the third measurement criterion; and
applying, by the terminal, the third measurement criterion according to the sixth time point, and/or canceling application of the third measurement criterion according to the seventh time point.

Optionally, the sixth time point and/or the seventh time point may be represented by at least one of the following:
an absolute time, for example, universal time coordinated (Universal Time Coordinated, UTC);
a system frame number (System Frame Number, SFN);
the absolute time and a second offset, for example, the second offset may be specified in a protocol or configured by a network;
the system frame number and a third offset, for example, the second offset may be specified in a protocol or configured by a network; and
a start point and a length of a timer.

In some embodiments, the fourth system information includes a sixth time point, and the sixth time point is used to indicate a time point at which the terminal applies the time-based measurement criterion/location-based measurement criterion. For example, the terminal applies the time-based measurement criterion/location-based measurement criterion at the sixth time point until cell reselection occurs, and then cancels application of the time-based measurement criterion/location-based measurement criterion. The sixth time point may be represented in the following manner:
an absolute time (for example, UTC);
an SFN number;
a length of a timer, for example, once the terminal receives the time-based measurement criterion/location-based measurement criterion, the timer is started, the length of the timer is the sixth time point, and when the timer times out, the terminal applies the time-based measurement criterion/location-based measurement criterion; and
a start point and the length of the timer, for example, the terminal starts the timer at the start point of the timer, and when the timer times out, the terminal applies the time-based measurement criterion/location-based measurement criterion.

In some other embodiments, the fourth system information includes the sixth time point and the seventh time point. The sixth time point is used to indicate a time point at which the terminal applies the time-based measurement criterion/location-based measurement criterion, and the seventh time point is used to indicate a time point at which the terminal cancels application of the time-based measurement criterion/location-based measurement criterion. For example, the terminal applies the time-based measurement criterion/location-based measurement criterion at the sixth time point, and cancels application of the time-based measurement criterion/location-based measurement criterion at the seventh time point. That is, from the sixth time point to the seventh time point, the terminal allows neighboring cell measurement to be performed based on the time-based measurement criterion/location-based measurement criterion. The sixth time point and the seventh time point may be represented in the following manner:
an absolute time (for example, UTC);
an SFN number;
the absolute time/SFN number and an offset (offset); and
a start point and a length of a timer, for example, the terminal applies the time-based measurement criterion/location-based measurement criterion at the sixth time point and starts the timer, and when the timer times out, the terminal cancels application of the time-based measurement criterion/location-based measurement criterion.

Manner 3: The terminal always applies the location-based measurement criterion and applies the time-based measurement criterion based on a first condition.

In this manner, the terminal always applies the location-based measurement criterion based on a specification in a protocol, that is, it is specified in a protocol that once the terminal receives the related information of the location-based measurement criterion, the terminal should apply the location-based measurement criterion. Before the performing neighboring cell measurement based on a first measurement criterion, the terminal applies the location-based measurement criterion, and applies the time-based measurement criterion when the first condition is satisfied.

Optionally, the first condition may include at least one of the following:
a signal strength value Srxlev of a serving cell is greater than or equal to a first threshold;
a signal quality value Squal of the serving cell is greater than or equal to a second threshold; and
a spatial variation of a first satellite is greater than or equal to a third threshold, and the first satellite is a satellite connected to the serving cell. For example, a variation in one or more parameters in ephemeris information of the serving cell exceeds a specific threshold.

It should be noted that, the first condition may be a specification in a protocol, network side configuration, or the like. The first threshold, the second threshold, and the third threshold may be configured by a network side or specified in a protocol and may be determined based on an actual condition. When cell reselection occurs, the terminal cancels application of the time-based measurement criterion.

Manner 4: The terminal always applies the time-based measurement criterion and applies the location-based measurement criterion based on a second condition.

In this manner, the terminal always applies the time-based measurement criterion based on a specification in a protocol, that is, it is specified in a protocol that once the terminal receives the related information of the time-based measurement criterion, the terminal should apply the time-based measurement criterion. Before the performing neighboring cell measurement based on a first measurement criterion, the terminal applies the time-based measurement criterion, and applies the location-based measurement criterion when the second condition is satisfied.

Optionally, the second condition may include at least one of the following:
a signal strength value Srxlev of a serving cell is less than or equal to a fourth threshold;
a signal quality value Squal of the serving cell is less than or equal to a fifth threshold; and
a spatial variation of a first satellite is greater than or equal to a sixth threshold, where the first satellite is a satellite connected to the serving cell. For example, a change in one or more parameters in ephemeris information of the serving cell exceeds a specific threshold.

It should be noted that, the second condition may be a specification in a protocol, network side configuration, or the like. The fourth threshold, the fifth threshold, and the sixth threshold may be configured by a network side and may be determined based on an actual condition. When cell reselection occurs, the terminal cancels application of the location-based measurement criterion.

Manner 5: According to an indication or a predefined/preconfigured/configured rule, the terminal applies or cancels application of the time-based measurement criterion; and according to an indication or a predefined/preconfigured/configured rule, the terminal applies or cancels application of the location-based measurement criterion.

In this manner, before the performing neighboring cell measurement based on a first measurement criterion, the terminal may apply or cancel application of the time-based measurement criterion according to second downlink information, fifth system information, or a first condition, and apply or cancel application of the location-based measurement criterion according to third downlink information, sixth system information, or a second condition.

It should be noted that, for specific related content of the second downlink information and the third downlink information, refer to the foregoing descriptions of the first downlink information. For specific related content of the fifth system information and the sixth system information, refer to the foregoing descriptions of the fourth system information. For the first condition and the second condition, refer to the foregoing descriptions. Details are not described herein again.

FIG. 5 is a flowchart of a cell measurement method according to an embodiment of this application. The method is applied to a network side device. As shown in FIG. 5, the method includes the following steps.

Step 51: A network side device sends first related information of a time-based measurement criterion and/or second related information of a location-based measurement criterion to a terminal.

Optionally, when only the first related information of the time-based measurement criterion is sent, the first related information includes: a first time point and/or a second time point, where the first time point is used to indicate a time point at which a serving cell stops serving a first coverage area; the second time point is used to indicate a time point at which the serving cell stops serving a second coverage area; the first coverage area is an entire area covered by the serving cell; and the second coverage area is a partial area covered by the serving cell, and the terminal is located in the second coverage area. Therefore, after obtaining the first time point and/or the second time point, the terminal may perform neighboring cell measurement according to the first time point and/or the second time point, and may start neighboring cell measurement at a proper time point.

In this way, the terminal may perform neighboring cell measurement based on the time-based measurement criterion and/or the location-based measurement criterion, so that the terminal can start neighboring cell measurement at a proper time point through an optimized cell reselection measurement criterion, thereby ensuring mobility of a terminal in an idle/inactive state.

Optionally, the sending first related information of a time-based measurement criterion to a terminal may include at least one of the following:
(1) sending, by the network side device, first system information and/or first dedicated signaling to the terminal, where the first system information carries the first time point, and the first dedicated signaling carries the first time point;
(2) sending, by the network side device, second system information and/or second dedicated signaling to the terminal, where the second system information carries a first association relationship, the second dedicated signaling carries the first association relationship, the first association relationship is used to indicate an association relationship between at least one third coverage area and at least one third time point, the third coverage area is a partial area covered by the serving cell, and the third time point is used to indicate a time point at which the serving cell stops serving the third coverage area associated with the third time point;
(3) sending, by the network side device, third system information and/or third dedicated signaling to the terminal, where the third system information carries a second association relationship, the third dedicated signaling carries the second association relationship, the second association relationship is used to indicate an association relationship between at least one second beam and at least one fourth time point, an area covered by the second beam is a partial area covered by the serving cell, and the fourth time point is used to indicate a time point at which the serving cell stops serving the area covered by the second beam associated with the fourth time point; and
(4) sending, by the network side device, a fifth time point corresponding to a third beam to the terminal.

It should be noted that, the first system information, the second system information, and the third system information may be the same or different. The first dedicated signaling, the second dedicated signaling, and the third dedicated signaling may be the same or different.

Optionally, the network side device may send first information to the terminal, where the first information is used to indicate coverage information of the serving cell, and the first information includes at least one of the following:
a reference location;
a first distance threshold;
a moving direction of the reference location;
a moving speed of the reference location;
a coverage area of the serving cell;
a moving direction of the serving cell;
a moving speed of the serving cell; and
a rule for how the reference location changes over time.

Optionally, the network side device may send first indication information to the terminal, where the first indication information is used to indicate that the first information is only used by the terminal to determine the second time point.

Optionally, the network side device may send second indication information to the terminal, where the second indication information is used by the terminal to determine that the serving cell is an earth-moving cell.

Optionally, when the first related information and the second related information are simultaneously sent, the first related information includes a first time point and/or a second time point, the first time point is used to indicate a time point at which a serving cell stops serving a first coverage area, and the first coverage area is an entire area covered by the serving cell; the second time point is used to indicate a time point at which the serving cell stops serving a second coverage area; the second coverage area is a partial area covered by the serving cell; and the second related information includes any one of the following:
a reference location;
a first distance threshold;
a rule for how the reference location changes over time;
a variability of the reference location;
a first reference location;
an eighth time point, where the eighth time point is used to indicate that a reference location of the serving cell at the eighth time point is the first reference location;
a validity time period, where the validity time period is used to indicate a longest time period in which the terminal applies the obtained reference location when a new reference location is not obtained;
a cycle of obtaining the reference location;
a trigger event of obtaining the reference location;
a moving speed of the reference location; and
a moving direction of the reference location.

Optionally, the network side device may send downlink information and/or system information to the terminal, where the downlink information is used by the terminal to apply or cancel application of the time-based measurement criterion, and/or the downlink information is used by the terminal to apply or cancel application of the location-based measurement criterion; and
the system information is used by the terminal to apply or cancel application of the time-based measurement criterion, and/or the system information is used by the terminal to apply or cancel application of the location-based measurement criterion.

Optionally, the downlink information may include at least one of the following:
a short message indication field, where the short message indication field carries a first bit, the first bit is used to indicate that the terminal applies or cancels application of the time-based measurement criterion, or the first bit is used to indicate that the terminal applies or cancels application of the location-based measurement criterion;
a first short message, where the first short message carries a second bit, the second bit is used to indicate that the terminal applies or cancels application of the time-based measurement criterion, or the second bit is used to indicate that the terminal applies or cancels application of the location-based measurement criterion; and
a second short message, where the second short message carries a third bit, the third bit includes a fourth bit and a fifth bit, the fourth bit is used to indicate that the terminal applies the time-based measurement criterion or the location-based measurement criterion, and the fifth bit is used to indicate that the terminal cancels application of the time-based measurement criterion or the location-based measurement criterion.

It should be noted that, for specific related content of the downlink information, refer to the foregoing descriptions of the first downlink information. This is not repeated herein.

Optionally, the system information may include at least one of the following:
a sixth time point, where the sixth time point is used to indicate a time point for applying the time-based measurement criterion or the location-based measurement criterion, and
a seventh time point, where the seventh time point is used to indicate a time point for canceling application of the time-based measurement criterion or the location-based measurement criterion.

It should be noted that, for specific related content of the system information, refer to the foregoing descriptions of the fourth system information. This is not repeated herein.

In the cell measurement method provided in the embodiments of this application, an execution entity may be a cell measurement method apparatus. In the embodiments of this application, that the cell measurement apparatus performs the cell measurement method is used as an example to describe the cell measurement apparatus provided in the embodiments of this application.

FIG. 6 is a schematic diagram of a structure of a cell measurement apparatus according to an embodiment of this application. The apparatus is applied to a terminal. As shown in FIG. 6, the cell measurement apparatus 60 includes:
an execution module 61, configured to perform neighboring cell measurement based on a first measurement criterion, where
the first measurement criterion includes at least one of the following: a time-based (time-based) measurement criterion and a location-based (location-based) measurement criterion.

Optionally, when the first measurement criterion includes the time-based measurement criterion, the execution module 61 is specifically configured to: obtain a first time point and/or a second time point, where the first time point is used to indicate a time point at which a serving cell stops serving a first coverage area; the second time point is used to indicate a time point at which the serving cell stops serving a second coverage area; the first coverage area is an entire area covered by the serving cell; and the second coverage area is a partial area covered by the serving cell, and the terminal is located in the second coverage area; and perform neighboring cell measurement according to the first time point and/or the second time point.

Optionally, the execution module 61 is specifically configured to perform any one of the following:
performing neighboring cell measurement before the first time point;
performing neighboring cell measurement before the second time point; and
performing neighboring cell measurement before the first time point and the second time point.

Optionally, the first time point is a time point for feeder link switch, and the second time point is a time point for service link switch.

Optionally, a frequency of a neighboring cell satisfies at least one of the following:
being the same as a frequency of the serving cell;
an inter-frequency or an inter-RAT frequency having a higher reselection priority than the frequency of the serving cell;
an inter-frequency or an inter-RAT frequency having a same reselection priority as the frequency of the serving cell; and
an inter-frequency or an inter-RAT frequency having a lower reselection priority than the frequency of the serving cell.

Optionally, the execution module 61 is specifically configured to: obtain the first time point through first system information and/or first dedicated signaling received from a network side device.

Optionally, the execution module 61 is specifically configured to: determine the second time point according to a first association relationship and a location of the terminal, where the first association relationship is used to indicate an association relationship between at least one third coverage area and at least one third time point, the third coverage area is a partial area covered by the serving cell, the third time point is used to indicate a time point at which the serving cell stops serving a first area, and the first area is the third coverage area associated with the third time point.

Optionally, the first association relationship is represented by a first list and a second list, the first list includes at least one coverage area identifier, the at least one coverage area identifier respectively indicates the at least one third coverage area, the second list includes the at least one third time point, the at least one coverage area identifier in the first list is in a one-to-one correspondence with the at least one third time point in the second list, an nth third time point in the second list is used to indicate a time point at which the serving cell stops serving a second area, the second area is an nth third coverage area in the first list, and n is an integer greater than or equal to 1; or
the first association relationship is represented by a third list, the third list includes at least one first element, and each first element is used to indicate an association relationship between one third coverage area and one third time point.

Optionally, the execution module 61 is further configured to: obtain the first association relationship through second system information and/or second dedicated signaling received from a network side device.

Optionally, the execution module 61 is specifically configured to: determine the second coverage area according to the location of the terminal; and determine, according to the first association relationship, a third time point associated with the second coverage area as the second time point.

Optionally, after the obtaining the first association relationship, the method further includes:
determining, by the terminal, that the serving cell is an earth-moving cell.

Optionally, the obtaining the second time point includes:
determining, by the terminal, the second time point according to a second association relationship and a first beam on which the terminal is located, where
the second association relationship is used to indicate an association relationship between at least one second beam and at least one fourth time point, an area covered by the second beam is a partial area covered by the serving cell, the fourth time point is used to indicate a time point at which the serving cell stops serving a third area, and the third area is the area covered by the second beam associated with the fourth time point.

Optionally, the second association relationship is represented by a fourth list and a fifth list, the fourth list includes at least one beam identifier, the at least one beam identifier respectively indicates the at least one second beam, the fifth list includes the at least one fourth time point, the the at least one beam identifier in the fourth list is in a one-to-one correspondence with the at least one fourth time point in the fifth list, an mth fourth time point in the fifth list is used to indicate a time point at which the serving cell stops serving a fourth area, the fourth area is an area covered by an mth beam in the fourth list, and m is an integer greater than or equal to 1; or
the second association relationship is represented by a sixth list, the sixth list includes at least one second element, and each second element is used to indicate an association relationship between one second beam and one fourth time point.

Optionally, the execution module 61 is further configured to: obtain the second association relationship through third system information and/or third dedicated signaling received from a network side device.

Optionally, the execution module 61 is specifically configured to: determine, according to the second association relationship, the fourth time point associated with the first beam as the second time point.

Optionally, the execution module 61 is specifically configured to: obtain a fifth time point corresponding to a third beam; and determine the fifth time point as the second time point.

Optionally, the execution module 61 is specifically configured to: obtain first information, where the first information is used to indicate coverage information of the serving cell; and determine the second time point according to the first information and a location of the terminal.

Optionally, the first information includes at least one of the following:
a reference location;
a first distance threshold;
a moving direction of the reference location;
a moving speed of the reference location;
a coverage area of the serving cell;
a moving direction of the serving cell;
a moving speed of the serving cell; and
a rule for how the reference location changes over time.

Optionally, the execution module 61 is specifically configured to perform any one of the following:
determining that a time point at which a distance from the terminal to the reference location is greater than or equal to the first distance threshold is the second time point; and
determining that a time point at which the terminal is not within the coverage area of the serving cell is the second time point.

Optionally, after the obtaining the first information, the execution module 61 is further configured to determine that the serving cell is an earth-moving cell.

Optionally, the execution module 61 is further configured to perform at least one of the following:
when obtaining the first time point, determining, according to a specification in a protocol, that the first information is only used by the terminal to determine the second time point; and
receiving first indication information, and determining, according to the first indication information, that the first information is only used by the terminal to determine the second time point.

Optionally, the execution module 61 is further configured to receive second indication information, and determine that the serving cell is an earth-moving cell according to the second indication information.

Optionally, a time point for performing neighboring cell measurement depends on terminal implementation; or
the time point for performing neighboring cell measurement is equal to the first time point minus a time point indicated by a first offset, or the time point for performing neighboring cell measurement is equal to the second time point minus a time point indicated by a first offset.

Optionally, the cell measurement apparatus 60 further includes:
an application module, configured to apply the time-based measurement criterion and the location-based measurement criterion.

Optionally, the application module is further configured to: apply a second measurement criterion; and apply or cancel application of a third measurement criterion according to first downlink information, or apply or cancel application of third measurement criterion according to fourth system information, where
the second measurement criterion is the location-based measurement criterion, and the third measurement criterion is the time-based measurement criterion; or the second measurement criterion is the time-based measurement criterion, and the third measurement criterion is the location-based measurement criterion.

Optionally, the application module is further configured to perform at least one of the following:
applying or canceling application of the third measurement criterion according to a first bit in a short message indication field, where the first bit is used to indicate the terminal to apply or cancel application of the third measurement criterion;
applying or canceling application of the third measurement criterion according to a second bit in a first short message, where the second bit is used to indicate the terminal to apply or cancel application of the third measurement criterion; and
applying or canceling application of the third measurement criterion according to a third bit in a second short message, where the third bit includes a fourth bit and a fifth bit, the fourth bit is used to indicate the terminal to apply the third measurement criterion, and the fifth bit is used to indicate the terminal to cancel application of the third measurement criterion.

Optionally, the application module is further configured to obtain a sixth time point and/or a seventh time point according to the fourth system information, where the sixth time point is used to indicate a time point for applying the third measurement criterion, and the seventh time point is used to indicate a time point for canceling application of the third measurement criterion; and apply the third measurement criterion according to the sixth time point, and/or cancel application of the third measurement criterion according to the seventh time point.

Optionally, the sixth time point and/or the seventh time point is represented by at least one of the following:
an absolute time;
a system frame number;
the absolute time and a second offset;
the system frame number and a third offset; and
a start point and a length of a timer.

Optionally, the application module is further configured to apply the location-based measurement criterion, and when a first condition is satisfied, apply the time-based measurement criterion, where
the first condition includes at least one of the following:
a signal strength value Srxlev of a serving cell is greater than or equal to a first threshold;
a signal quality value Squal of the serving cell is greater than or equal to a second threshold; and
a spatial variation of a first satellite is greater than or equal to a third threshold, and the first satellite is a satellite connected to the serving cell.

Optionally, the application module is further configured to apply the time-based measurement criterion, and when a second condition is satisfied, apply the location-based measurement criterion, where
the second condition includes at least one of the following:
a signal strength value Srxlev of a serving cell is less than or equal to a fourth threshold;
a signal quality value Squal of the serving cell is less than or equal to a fifth threshold; and
a spatial variation of a first satellite is greater than or equal to a sixth threshold, where the first satellite is a satellite connected to the serving cell.

Optionally, the application module is further configured to apply or cancel application of the time-based measurement criterion according to second downlink information, fifth system information, or a first condition, and apply or cancel application of the location-based measurement criterion according to third downlink information, sixth system information, or a second condition, where
the first condition includes at least one of the following:
a signal strength value Srxlev of a serving cell is greater than or equal to a first threshold;
a signal quality value Squal of the serving cell is greater than or equal to a second threshold; and
a spatial variation of a first satellite is greater than or equal to a third threshold, where
the second condition includes at least one of the following:
   a signal strength value Srxlev of a serving cell is less than or equal to a fourth threshold;
   a signal quality value Squal of the serving cell is less than or equal to a fifth threshold; and
   a spatial variation of a first satellite is greater than or equal to a sixth threshold, where
   the first satellite is a satellite connected to the serving cell.

Optionally, the cell measurement apparatus 60 further includes:
a receiving module, configured to receive first related information of the time-based measurement criterion and second related information of the location-based measurement criterion, where the first related information includes a first time point and/or a second time point, the first time point is used to indicate a time point at which the serving cell stops serving a first coverage area, and the first coverage area is an entire area covered by the serving cell; the second time point is used to indicate a time point at which the serving cell stops serving a second coverage area; the second coverage area is a partial area covered by the serving cell; and
the second related information includes any one of the following:
   a reference location;
   a first distance threshold;
   a rule for how the reference location changes over time;
   a variability of the reference location;
   a first reference location;
   an eighth time point, where the eighth time point is used to indicate that a reference location of the serving cell at the eighth time point is the first reference location;
   a validity time period, where the validity time period is used to indicate a longest time period in which the terminal applies the obtained reference location when a new reference location is not obtained;
   a cycle of obtaining the reference location;
   a trigger event of obtaining the reference location;
   a moving speed of the reference location; and
   a moving direction of the reference location.

The cell measurement apparatus 60 in the embodiments of this application may be an electronic device, for example, an electronic device having an operating system, or may be a component in the electronic device, for example, an integrated circuit or a chip. The electronic device may be a terminal, or may be a device other than the terminal. For example, the terminal may include, but is not limited to, a type of the terminal 11 listed above. Another device may be a server, a network attached storage (Network Attached Storage, NAS), or the like. This is not specifically limited in the embodiments of this application.

The cell measurement apparatus 60 provided in the embodiments of this application may implement various processes of the method embodiment in FIG. 2, and achieve the same technical effect, which will not be described in detail herein again to avoid repetition.

FIG. 7 is a schematic diagram of a structure of a configuration apparatus according to an embodiment of this application. The apparatus is applied to a terminal. As shown in FIG. 7, the configuration apparatus 70 includes:
a sending module 71, configured to send first related information of a time-based measurement criterion and/or second related information of a location-based measurement criterion to a terminal.

Optionally, when only the first related information of the time-based measurement criterion is sent, the first related information includes: a first time point and/or a second time point, where
the first time point is used to indicate a time point at which a serving cell stops serving a first coverage area; the second time point is used to indicate a time point at which the serving cell stops serving a second coverage area; the first coverage area is an entire area covered by the serving cell; and the second coverage area is a partial area covered by the serving cell, and the terminal is located in the second coverage area.

Optionally, the sending module 71 is further configured to perform at least one of the following:
sending first system information and/or first dedicated signaling to the terminal, where the first system information carries the first time point, and the first dedicated signaling carries the first time point;
sending second system information and/or second dedicated signaling to the terminal, where the second system information carries a first association relationship, the second dedicated signaling carries the first association relationship, the first association relationship is used to indicate an association relationship between at least one third coverage area and at least one third time point, the third coverage area is a partial area covered by the serving cell, and the third time point is used to indicate a time point at which the serving cell stops serving the third coverage area associated with the third time point;
sending third system information and/or third dedicated signaling to the terminal, where the third system information carries a second association relationship, the third dedicated signaling carries the second association relationship, the second association relationship is used to indicate an association relationship between at least one second beam and at least one fourth time point, an area covered by the second beam is a partial area covered by the serving cell, the fourth time point is used to indicate a time point at which the serving cell stops serving the area covered by the second beam associated with the fourth time point; and
sending a fifth time point corresponding to a third beam to the terminal.

Optionally, the sending module 71 is further configured to send first information to the terminal, where the first information is used to indicate coverage information of the serving cell, and the first information includes at least one of the following:
a reference location;
a first distance threshold;
a moving direction of the reference location;
a moving speed of the reference location;
a coverage area of the serving cell;
a moving direction of the serving cell;
a moving speed of the serving cell; and
a rule for how the reference location changes over time.

Optionally, the sending module 71 is further configured to send first indication information to the terminal, where the first indication information is used to indicate that the first information is only used by the terminal to determine the second time point.

Optionally, the sending module 71 is further configured to send second indication information to the terminal, where the second indication information is used by the terminal to determine that the serving cell is an earth-moving cell.

Optionally, when the first related information and the second related information are simultaneously sent, the first related information includes a first time point and/or a second time point, the first time point is used to indicate a time point at which a serving cell stops serving a first coverage area, and the first coverage area is an entire area covered by the serving cell; the second time point is used to indicate a time point at which the serving cell stops serving a second coverage area; and the second coverage area is a partial area covered by the serving cell, where
the second related information includes any one of the following:
a reference location;
a first distance threshold;
a rule for how the reference location changes over time;
a variability of the reference location;
a first reference location;
an eighth time point, where the eighth time point is used to indicate that a reference location of the serving cell at the eighth time point is the first reference location;
a validity time period, where the validity time period is used to indicate a longest time period in which the terminal applies the obtained reference location when a new reference location is not obtained;
a cycle of obtaining the reference location;
a trigger event of obtaining the reference location;
a moving speed of the reference location; and
a moving direction of the reference location.

Optionally, the sending module 71 is further configured to send downlink information and/or system information to the terminal, where
the downlink information is used by the terminal to apply or cancel application of the time-based measurement criterion, and/or the downlink information is used by the terminal to apply or cancel application of the location-based measurement criterion; and
the system information is used by the terminal to apply or cancel application of the time-based measurement criterion, and/or the system information is used by the terminal to apply or cancel application of the location-based measurement criterion.

Optionally, the downlink information includes at least one of the following:
a short message indication field, where the short message indication field carries a first bit, the first bit is used to indicate that the terminal applies or cancels application of the time-based measurement criterion, or the first bit is used to indicate that the terminal applies or cancels application of the location-based measurement criterion;
a first short message, where the first short message carries a second bit, the second bit is used to indicate that the terminal applies or cancels application of the time-based measurement criterion, or the second bit is used to indicate that the terminal applies or cancels application of the location-based measurement criterion; and
a second short message, where the second short message carries a third bit, the third bit includes a fourth bit and a fifth bit, the fourth bit is used to indicate that the terminal applies the time-based measurement criterion or the location-based measurement criterion, and the fifth bit is used to indicate that the terminal cancels application of the time-based measurement criterion or the location-based measurement criterion.

Optionally, the system information includes at least one of the following:
a sixth time point, where the sixth time point is used to indicate a time point for applying the time-based measurement criterion or the location-based measurement criterion, and
a seventh time point, where the seventh time point is used to indicate a time point for canceling application of the time-based measurement criterion or the location-based measurement criterion.

The configuration apparatus 70 provided in the embodiments of this application can implement various processes of the method embodiment in FIG. 5, and achieve the same technical effect, which will not be described in detail herein again to avoid repetition.

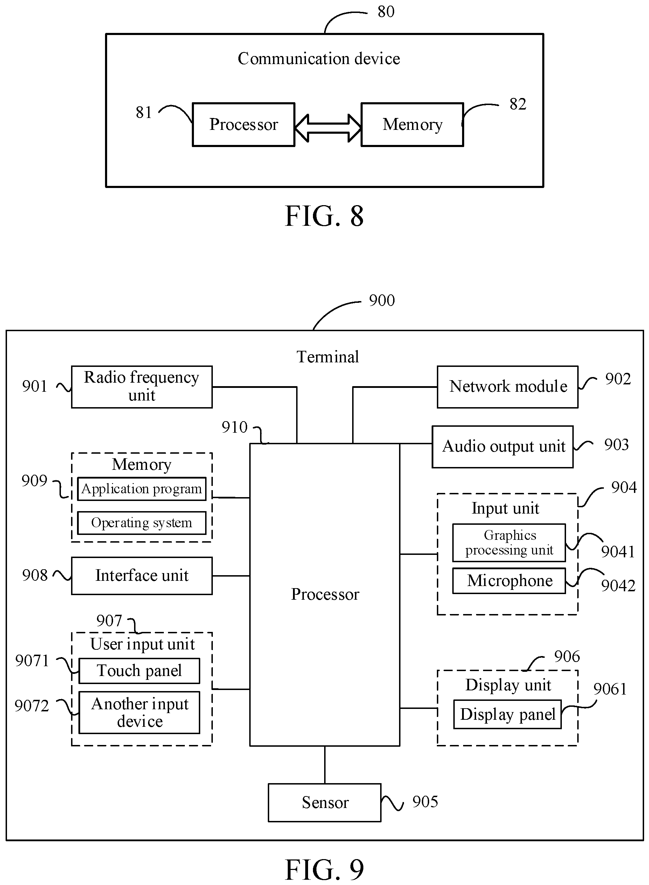

Optionally, as shown in FIG. 8, embodiments of this application further provide a communication device 80, including a processor 81 and a memory 82, where a program or instructions, executable on the processor 81, are stored in the memory 82. For example, when the communication device 80 is a terminal, the program or the instructions, when executed by the processor 81, implement the various steps of the cell measurement method embodiment, and may achieve the same technical effect. When the communication device 80 is a network side device, various steps of the configuration method embodiment is implemented when the program or the instructions are executed by the processor 81, and may achieve the same technical effect, which will not be described in detail herein again to avoid repetition.

Embodiments of this application further provide a terminal, including a processor and a communication interface, where the processor is configured to perform neighboring cell measurement based on a first measurement criterion; and the first measurement criterion may include at least one of the following: a time-based measurement criterion and a location-based measurement criterion. This terminal embodiment corresponds to the terminal side method embodiment. Each implementation process and implementation of the method embodiment may be applied to the terminal embodiment, and may achieve the same technical effect.

Specifically, FIG. 9 is a schematic diagram of a hardware structure of a terminal according to an embodiment of this application.

The terminal 900 includes, but is not limited to, at least some components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the terminal 900 may further include a power supply (such as a battery) for supplying power to the components. The power supply may be logically connected to the processor 910 by a power management system, thereby implementing functions such as charging, discharging, and power consumption management by using the power management system. A terminal structure shown in FIG. 9 does not constitute a limitation to the terminal, and the terminal may include more or fewer components than those shown in the figure, or some components may be combined, or a different component deployment may be used, and details are not repeated herein.

It should be understood that, in this embodiment of this application, the input unit 904 may include a graphics processing unit (Graphics Processing Unit, GPU) 9041 and a microphone 9042. The graphics processing unit 9041 performs processing on image data of a static picture or a video that is obtained by an image acquisition apparatus (for example, a camera) in a video acquisition mode or an image acquisition mode. The display unit 906 may include a display panel 9061, and the display panel 9061 may be configured by using a liquid crystal display, an organic light-emitting diode, or the like. The user input unit 907 includes at least one of a touch panel 9071 and another input device 9072. The touch panel 9071 is also referred to as a touchscreen. The touch panel 9071 may include two parts: a touch detection apparatus and a touch controller. The another input device 9072 may include, but not limited to, a physical keyboard, a functional key (such as a volume control key or a switch key), a track ball, a mouse, and a joystick, which are not described herein in detail.

In the embodiments of this application, after receiving downlink data from the network side device, the radio frequency unit 901 may transmit the downlink data to the processor 910 for processing. In addition, the radio frequency unit 901 may send uplink data to the network side device. Generally, the radio frequency unit 901 includes, but is not limited to, an antenna, an amplifier, a transceiver, a coupler, a low noise amplifier, a duplexer, and the like.

The memory 909 may be configured to store a software program or instructions and various data. The memory 909 may mainly include a first storage area storing a program or instructions and a second storage area storing data. The first storage area may store an operating system, an application program or instructions required by at least one function (such as a sound playback function and an image display function), and the like. In addition, the memory 909 may include a volatile memory or a non-volatile memory, or the memory 909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DR RAM). The memory 909 in this embodiment of this application includes but is not limited to these memories and any other suitable types of memories.

The processor 910 may include one or more processing units; and optionally, the processor 910 integrates an application processor and a modem processor. The application processor mainly processes operations relating to an operating system, a user interface, an application program, and the like. The modem processor mainly processes a wireless communication signal, such as a baseband processor. It may be understood that, the foregoing modem processor may either not be integrated into the processor 910.

The processor 910 is configured to perform neighboring cell measurement based on a first measurement criterion; and the first measurement criterion includes at least one of the following: a time-based measurement criterion and a location-based measurement criterion.

It may be understood that, the terminal 900 provided in the embodiments of this application may implement various processes of the method embodiments shown in FIG. 2, and achieve the same technical effect, which will not be described in detail herein again to avoid repetition.

Embodiments of this application further provide a network side device, including a processor and a communication interface, where the communication interface is configured to send first related information of a time-based measurement criterion and/or second related information of a location-based measurement criterion to a terminal. The network side device embodiment corresponds to the network side device method embodiment. Each implementation process and implementation of the method embodiment may be applied to the network side device embodiment, and may achieve the same technical effect.

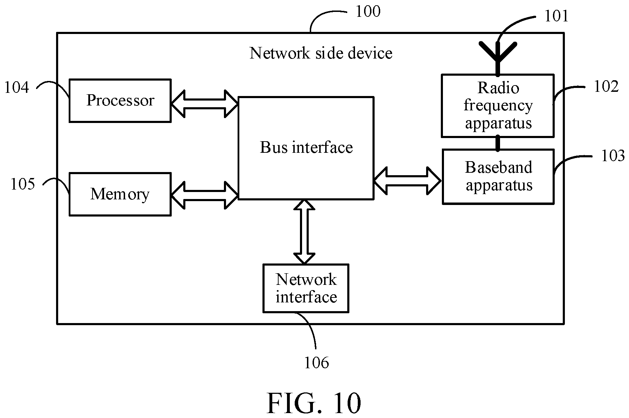

Specifically, embodiments of this application further provide a network side device. As shown in FIG. 10, the network side device 100 includes an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information through the antenna 101, and sends the received information to the baseband apparatus 103 for processing. In a downlink direction, the baseband apparatus 103 performs processing on the to-be-sent information, and sends the to-be-sent information to the radio frequency apparatus 102. After performing processing on the received information, the radio frequency apparatus 102 sends the received information out through the antenna 101.

The method performed by the network side device in the foregoing embodiments may be implemented in the baseband apparatus 103. The baseband apparatus 103 includes a baseband processor.

The baseband apparatus 103 may include, for example, at least one baseband board. A plurality of chips are disposed on the baseband board. As shown in FIG. 10, one chip is, for example, the baseband processor, and is connected to the memory 105 via a bus interface, to invoke a program in the memory 105, to perform the network device operations shown in the foregoing method embodiments.

The network side device may further include a network interface 106. The interface is, for example, a common public radio interface (common public radio interface, CPRI).

Specifically, the network side device 100 in embodiments of the present invention further includes: instructions or a program stored in the memory 105 and executable on the processor 104. The processor 104 invokes the instructions or program in the memory 105 to perform the method performed by each module shown in FIG. 7, and achieves the same technical effect, which will not be described in detail herein again to avoid repetition.

Embodiments of this application further provide a readable storage medium, storing a program or instructions, where the program or instructions, when executed by a processor, implement various processes of the cell measurement method embodiment or various processes of the configuration method embodiment, and may achieve the same technical effect, which will not be described in detail herein again to avoid repetition.

The processor is a processor in the terminal described in the foregoing embodiment. The readable storage medium may be non-transient or non-volatile. The readable storage medium may include a computer-readable storage medium, for example, a computer read-only memory ROM, a random access memory RAM, a magnetic disk, or an optical disc.

Embodiments of this application further provide a chip, including a processor and a communication interface, where the communication interface is coupled to the processor. The processor is configured to run a program or instructions, to implement various processes of the cell measurement method embodiment, or various processes of the configuration method embodiment, and may achieve the same technical effects, which will not be described in detail herein again to avoid repetition.

It should be understood that, the chip mentioned in embodiments of this application may be further referred to as a system-level chip, a system chip, a chip system, a system-on-chip, or the like.

Embodiments of this application further provide a computer program/program product, where the computer program/program product is stored in a storage medium, and the computer program/program product is executed by at least one processor to implement the various processes of the cell measurement method embodiment, or implement the various processes of the configuration method embodiment, and may achieve the same technical effect, which will not be described in detail herein again to avoid repetition.

Embodiments of this application further provide a communication system, including a terminal and a network side device, where the terminal may be configured to perform the steps of the cell measurement method as described above, and the network side device may be configured to perform the steps of the configuration method as described above.

It should be noted that, the terms "include", "comprise" or any other variants mean to cover the non-exclusive inclusion, so that the processes, methods, objects, or apparatuses which include a series of elements not only include those elements, but also include other elements which are not clearly listed, or include inherent elements of the processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially, or the part contributing to the related art, may be presented in the form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in embodiments of this application.

Although embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A cell measurement method, comprising:
performing, by a terminal, neighboring cell measurement based on a first measurement criterion, wherein
the first measurement criterion comprises at least one of the following: a time-based (time-based) measurement criterion and a location-based (location-based) measurement criterion.

2. The method according to claim 1, wherein when the first measurement criterion comprises the time-based measurement criterion, the performing neighboring cell measurement based on a first measurement criterion comprises:
obtaining, by the terminal, a first time point and/or a second time point, wherein the first time point is used to indicate a time point at which a serving cell stops serving a first coverage area; the second time point is used to indicate a time point at which the serving cell stops serving a second coverage area; the first coverage area is an entire area covered by the serving cell; and the second coverage area is a partial area covered by the serving cell, and the terminal is located in the second coverage area; and
performing, by the terminal, neighboring cell measurement according to the first time point and/or the second time point.

3. The method according to claim 2, wherein the performing neighboring cell measurement according to the first time point and/or the second time point comprises any one of the following:
performing, by the terminal, neighboring cell measurement before the first time point;
performing, by the terminal, neighboring cell measurement before the second time point; and
performing, by the terminal, neighboring cell measurement before the first time point and the second time point.

4. The method according to claim 2, wherein the first time point is a time point at which feeder link switch is performed, and the second time point is a time point at which service link switch is performed.

5. The method according to claim 2, wherein a frequency of a neighboring cell satisfies at least one of the following:
being the same as a frequency of the serving cell;
an inter-frequency or an inter-RAT frequency having a higher reselection priority than the frequency of the serving cell;
an inter-frequency or an inter-RAT frequency having a same reselection priority as the frequency of the serving cell; and
an inter-frequency or an inter-RAT frequency having a lower reselection priority than the frequency of the serving cell.

6. The method according to any one of claims 2 to 5, wherein the obtaining a first time point comprises:
obtaining, by the terminal, the first time point through first system information and/or first dedicated signaling received from a network side device.

7. The method according to any one of claims 2 to 5, wherein the obtaining a second time point comprises:
determining, by the terminal, the second time point according to a first association relationship and a location of the terminal, wherein
the first association relationship is used to indicate an association relationship between at least one third coverage area and at least one third time point, the third coverage area is a partial area covered by the serving cell, the third time point is used to indicate a time point at which the serving cell stops serving a first area, and the first area is the third coverage area associated with the third time point.

8. The method according to claim 7, wherein the first association relationship is represented by a first list and a second list, the first list comprises at least one coverage area identifier, the at least one coverage area identifier respectively indicates the at least one third coverage area, the second list comprises the at least one third time point, the at least one coverage area identifier in the first list is in a one-to-one correspondence with the at least one third time point in the second list, an n^{th} third time point in the second list is used to indicate a time point at which the serving cell stops serving a second area, the second area is an n^{th} third coverage area in the first list, and n is an integer greater than or equal to 1;
or
the first association relationship is represented by a third list, the third list comprises at least one first element, and each first element is used to indicate an association relationship between one third coverage area and one third time point.

9. The method according to claim 7, wherein before the determining the second time point, the method further comprises:
obtaining, by the terminal, the first association relationship through second system information and/or second dedicated signaling received from a network side device.

10. The method according to claim 7, wherein the determining the second time point according to a first association relationship and a location of the terminal comprises:
determining, by the terminal, the second coverage area according to the location of the terminal; and
determining, by the terminal according to the first association relationship, a third time point associated with the second coverage area as the second time point.

11. The method according to claim 9, wherein after the obtaining the first association relationship, the method further comprises:
determining, by the terminal, that the serving cell is an earth-moving cell.

12. The method according to any one of claims 2 to 5, wherein the obtaining a second time point comprises:
determining, by the terminal, the second time point according to a second association relationship and a first beam on which the terminal is located, wherein
the second association relationship is used to indicate an association relationship between at least one second beam and at least one fourth time point, an area covered by the second beam is a partial area covered by the serving cell, the fourth time point is used to indicate a time point at which the serving cell stops serving a third area, and the third area is the area covered by the second beam associated with the fourth time point.

13. The method according to claim 12, wherein the second association relationship is represented by a fourth list and a fifth list, the fourth list comprises at least one beam identifier, the at least one beam identifier respectively indicates the at least one second beam, the fifth list comprises the at least one fourth time point, the the at least one beam identifier in the fourth list is in a one-to-one correspondence with the at least one fourth time point in the fifth list, an m^{th} fourth time point in the fifth list is used to indicate a time point at which the serving cell stops serving a fourth area, the fourth area is an area covered by an m^{th} beam in the fourth list, and m is an integer greater than or equal to 1;
or
the second association relationship is represented by a sixth list, the sixth list comprises at least one second element, and each second element is used to indicate an association relationship between one second beam and one fourth time point.

14. The method according to claim 12, wherein before the determining the second time point, the method further comprises:
obtaining, by the terminal, the second association relationship through third system information and/or third dedicated signaling received from a network side device.

15. The method according to claim 12, wherein the determining the second time point according to a second association relationship and a first beam on which the terminal is located comprises:
determining, by the terminal according to the second association relationship, the fourth time point associated with the first beam as the second time point.

16. The method according to any one of claims 2 to 5, wherein the obtaining a second time point comprises:
obtaining, by the terminal, a fifth time point corresponding to a third beam; and
determining, by the terminal, the fifth time point as the second time point.

17. The method according to any one of claims 2 to 5, wherein the obtaining a second time point comprises:
obtaining, by the terminal, first information, wherein the first information is used to indicate coverage information of the serving cell; and
determining, by the terminal, the second time point according to the first information and a location of the terminal.

18. The method according to claim 17, wherein the first information comprises at least one of the following:
a reference location;
a first distance threshold;
a moving direction of the reference location;
a moving speed of the reference location;
a coverage area of the serving cell;
a moving direction of the serving cell;
a moving speed of the serving cell; and
a rule for how the reference location changes over time.

19. The method according to claim 18, wherein the determining the second time point according to the first information and a location of the terminal comprises any one of the following:
determining, by the terminal, that a time point at which a distance from the terminal to the reference location is greater than or equal to the first distance threshold is the second time point; and
determining, by the terminal, that a time point at which the terminal is not within the coverage area of the serving cell is the second time point.

20. The method according to claim 17, wherein after the obtaining first information, the method further comprises:
determining, by the terminal, that the serving cell is an earth-moving cell.

21. The method according to claim 17, wherein the method further comprises at least one of the following:
when obtaining the first time point, determining, by the terminal according to a specification in a protocol, that the first information is only used by the terminal to determine the second time point; and
receiving, by the terminal, first indication information, and determining, according to the first indication information, that the first information is only used by the terminal to determine the second time point.

22. The method according to claim 2, wherein the method further comprises:
receiving, by the terminal, second indication information, and determining that the serving cell is an earth-moving cell according to the second indication information.

23. The method according to claim 2, wherein a time point for performing neighboring cell measurement depends on terminal implementation;
or
the time point for performing neighboring cell measurement is equal to the first time point minus a time point indicated by a first offset, or the time point for performing neighboring cell measurement is equal to the second time point minus a time point indicated by a first offset.

24. The method according to claim 1, wherein before the performing neighboring cell measurement based on a first measurement criterion, the method further comprises:
applying, by the terminal, the time-based measurement criterion and the location-based measurement criterion.

25. The method according to claim 1, wherein before the performing neighboring cell measurement based on a first measurement criterion, the method further comprises:
applying, by the terminal, a second measurement criterion; and
applying, by the terminal, or canceling application of a third measurement criterion according to first downlink information, or applying or canceling application of a third measurement criterion according to fourth system information, wherein
the second measurement criterion is the location-based measurement criterion, and the third measurement criterion is the time-based measurement criterion; or the second measurement criterion is the time-based measurement criterion, and the third measurement criterion is the location-based measurement criterion.

26. The method according to claim 25, wherein the applying or canceling application of a third measurement criterion according to first downlink information comprises at least one of the following:
applying, by the terminal, or canceling application of the third measurement criterion according to a first bit in a short message indication field, wherein the first bit is used to indicate the terminal to apply or cancel application of the third measurement criterion;
applying, by the terminal, or canceling application of the third measurement criterion according to a second bit in a first short message, wherein the second bit is used to indicate the terminal to apply or cancel application of the third measurement criterion; and
applying, by the terminal, or canceling application of the third measurement criterion according to a third bit in a second short message, wherein the third bit comprises a fourth bit and a fifth bit, the fourth bit is used to indicate the terminal to apply the third measurement criterion, and the fifth bit is used to indicate the terminal to cancel application of the third measurement criterion.

27. The method according to claim 1, wherein the applying or canceling application of third measurement criterion according to fourth system information comprises:
obtaining, by the terminal, a sixth time point and/or a seventh time point according to the fourth system information, wherein the sixth time point is used to indicate a time point for applying the third measurement criterion, and the seventh time point is used to indicate a time point for canceling application of the third measurement criterion; and
applying, by the terminal, the third measurement criterion according to the sixth time point, and/or canceling application of the third measurement criterion according to the seventh time point.

28. The method according to claim 27, wherein the sixth time point and/or the seventh time point is represented by at least one of the following:
an absolute time;
a system frame number;
the absolute time and a second offset;
the system frame number and a third offset; and
a start point and a length of a timer.

29. The method according to claim 1, wherein before the performing neighboring cell measurement based on a first measurement criterion, the method further comprises:
applying, by the terminal, the location-based measurement criterion, and when a first condition is satisfied, applying the time-based measurement criterion, wherein
the first condition comprises at least one of the following:
a signal strength value Srxlev of a serving cell is greater than or equal to a first threshold;
a signal quality value Squal of the serving cell is greater than or equal to a second threshold; and
a spatial variation of a first satellite is greater than or equal to a third threshold, and the first satellite is a satellite connected to the serving cell.

30. The method according to claim 1, wherein before the performing neighboring cell measurement based on a first measurement criterion, the method further comprises:
applying, by the terminal, the time-based measurement criterion, and when a second condition is satisfied, applying the location-based measurement criterion, wherein
the second condition comprises at least one of the following:
a signal strength value Srxlev of a serving cell is less than or equal to a fourth threshold;
a signal quality value Squal of the serving cell is less than or equal to a fifth threshold; and
a spatial variation of a first satellite is greater than or equal to a sixth threshold, wherein the first satellite is a satellite connected to the serving cell.

31. The method according to claim 1, wherein before the performing neighboring cell measurement based on a first measurement criterion, the method further comprises:
applying, by the terminal, or canceling application of the time-based measurement criterion according to second downlink information, fifth system information, or a first condition, and applying or canceling application of the location-based measurement criterion according to third downlink information, sixth system information, or a second condition, wherein
the first condition comprises at least one of the following:
a signal strength value Srxlev of a serving cell is greater than or equal to a first threshold;
a signal quality value Squal of the serving cell is greater than or equal to a second threshold; and
a spatial variation of a first satellite is greater than or equal to a third threshold, wherein
the second condition comprises at least one of the following:
a signal strength value Srxlev of a serving cell is less than or equal to a fourth threshold;
a signal quality value Squal of the serving cell is less than or equal to a fifth threshold; and
a spatial variation of a first satellite is greater than or equal to a sixth threshold, wherein
the first satellite is a satellite connected to the serving cell.

32. The method according to any one of claims 24 to 31, wherein the method further comprises:
receiving, by the terminal, first related information of the time-based measurement criterion and second related information of the location-based measurement criterion, wherein
the first related information comprises a first time point and/or a second time point, the first time point is used to indicate a time point at which the serving cell stops serving a first coverage area, and the first coverage area is an entire area covered by the serving cell; the second time point is used to indicate a time point at which the serving cell stops serving a second coverage area; the second coverage area is a partial area covered by the serving cell; and
the second related information comprises any one of the following:
a reference location;
a first distance threshold;
a rule for how the reference location changes over time;
a variability of the reference location;
a first reference location;
an eighth time point, wherein the eighth time point is used to indicate that a reference location of the serving cell at the eighth time point is the first reference location;
a validity time period, wherein the validity time period is used to indicate a longest time period in which the terminal applies the obtained reference location when a new reference location is not obtained;
a cycle of obtaining the reference location;
a trigger event of obtaining the reference location;
a moving speed of the reference location; and
a moving direction of the reference location.

33. A configuration method, comprising:
sending, by a network side device, first related information of a time-based measurement criterion and/or second related information of a location-based measurement criterion to a terminal.

34. The method according to claim 33, wherein when only the first related information of the time-based measurement criterion is sent, the first related information comprises: a first time point and/or a second time point, wherein
the first time point is used to indicate a time point at which a serving cell stops serving a first coverage area; the second time point is used to indicate a time point at which the serving cell stops serving a second coverage area; the first coverage area is an entire area covered by the serving cell; and the second coverage area is a partial area covered by the serving cell, and the terminal is located in the second coverage area.

35. The method according to claim 34, wherein the sending first related information of a time-based measurement criterion to a terminal comprises at least one of the following:
sending, by the network side device, first system information and/or first dedicated signaling to the terminal, wherein the first system information carries the first time point, and the first dedicated signaling carries the first time point;
sending, by the network side device, second system information and/or second dedicated signaling to the terminal, wherein the second system information carries a first association relationship, the second dedicated signaling carries the first association relationship, the first association relationship is used to indicate an association relationship between at least one third coverage area and at least one third time point, the third coverage area is a partial area covered by the serving cell, and the third time point is used to indicate a time point at which the serving cell stops serving the third coverage area associated with the third time point;
sending, by the network side device, third system information and/or third dedicated signaling to the terminal, wherein the third system information carries a second association relationship, the third dedicated signaling carries the second association relationship, the second association relationship is used to indicate an association relationship between at least one second beam and at least one fourth time point, an area covered by the second beam is a partial area covered by the serving cell, the fourth time point is used to indicate a time point at which the serving cell stops serving the area covered by the second beam associated with the fourth time point; and
sending, by the network side device, a fifth time point corresponding to a third beam to the terminal.

36. The method according to claim 34, wherein the method further comprises:
sending, by the network side device, first information to the terminal, wherein the first information is used to indicate coverage information of the serving cell, and the first information comprises at least one of the following:
a reference location;
a first distance threshold;
a moving direction of the reference location;
a moving speed of the reference location;
a coverage area of the serving cell;
a moving direction of the serving cell;
a moving speed of the serving cell; and
a rule for how the reference location changes over time.

37. The method according to claim 36, wherein the method further comprises:
sending, by the network side device, first indication information to the terminal, wherein the first indication information is used to indicate that the first information is only used by the terminal to determine the second time point.

38. The method according to claim 33, wherein the method further comprises:
sending, by the network side device, second indication information to the terminal, wherein the second indication information is used by the terminal to determine that the serving cell is an earth-moving cell.

39. The method according to claim 33, wherein when the first related information and the second related information are simultaneously sent, the first related information comprises a first time point and/or a second time point, the first time point is used to indicate a time point at which a serving cell stops serving a first coverage area, and the first coverage area is an entire area covered by the serving cell; the second time point is used to indicate a time point at which the serving cell stops serving a second coverage area; the second coverage area is a partial area covered by the serving cell; and
the second related information comprises any one of the following:
a reference location;
a first distance threshold;
a rule for how the reference location changes over time;
a variability of the reference location;
a first reference location;
an eighth time point, wherein the eighth time point is used to indicate that a reference location of the serving cell at the eighth time point is the first reference location;
a validity time period, wherein the validity time period is used to indicate a longest time period in which the terminal applies the obtained reference location when a new reference location is not obtained;
a cycle of obtaining the reference location;
a trigger event of obtaining the reference location;
a moving speed of the reference location;
a moving direction of the reference location.

40. The method according to claim 33, wherein the method further comprises:
sending, by the network side device, downlink information and/or system information to the terminal, wherein
the downlink information is used by the terminal to apply or cancel application of the time-based measurement criterion, and/or the downlink information is used by the terminal to apply or cancel application of the location-based measurement criterion; and
the system information is used by the terminal to apply or cancel application of the time-based measurement criterion, and/or the system information is used by the terminal to apply or cancel application of the location-based measurement criterion.

41. The method according to claim 40, wherein the downlink information comprises at least one of the following:
a short message indication field, wherein the short message indication field carries a first bit, the first bit is used to indicate that the terminal applies or cancels application of the time-based measurement criterion, or the first bit is used to indicate that the terminal applies or cancels application of the location-based measurement criterion;
a first short message, wherein the first short message carries a second bit, the second bit is used to indicate that the terminal applies or cancels application of the time-based measurement criterion, or the second bit is used to indicate that the terminal applies or cancels application of the location-based measurement criterion; and
a second short message, wherein the second short message carries a third bit, the third bit comprises a fourth bit and a fifth bit, the fourth bit is used to indicate that the terminal applies the time-based measurement criterion or the location-based measurement criterion, and the fifth bit is used to indicate that the terminal cancels application of the time-based measurement criterion or the location-based measurement criterion.

42. The method according to claim 40, wherein the system information comprises at least one of the following:
a sixth time point, wherein the sixth time point is used to indicate a time point for applying the time-based measurement criterion or the location-based measurement criterion, and
a seventh time point, wherein the seventh time point is used to indicate a time point for canceling application of the time-based measurement criterion or the location-based measurement criterion.

43. A cell measurement apparatus, comprising:
an execution module, configured to perform neighboring cell measurement based on a first measurement criterion, wherein
the first measurement criterion comprises at least one of the following: a time-based (time-based) measurement criterion and a location-based (location-based) measurement criterion.

44. A configuration apparatus, comprising:
a sending module, configured to send first related information of a time-based measurement criterion and/or second related information of a location-based measurement criterion to a terminal.

45. A first terminal, comprising a processor and a memory, wherein the memory stores a program or instructions executable on the processor, and the program or the instructions, when executed by the processor, implement the steps of the cell measurement method according to any one of claims 1 to 32.

46. A network side device, comprising a processor and a memory, wherein the memory stores a program or instructions executable on the processor, and the program or the instructions, when executed by the processor, implement the steps of the configuration method according to any one of claims 33 to 42.

47. A readable storage medium, storing a program or instructions, wherein the program or the instructions, when executed by a processor, implement the cell measurement method according to any one of claims 1 to 32, or implement the steps of the configuration method according to any one of claims 33 to 42.
